(19) Europäisches Patentamt / European Patent Office / Office européen des brevets

(11) **EP 2 496 961 B1**

(12) **FASCICULE DE BREVET EUROPEEN**

(45) Date de publication et mention
de la délivrance du brevet:
**31.08.2016 Bulletin 2016/35**

(21) Numéro de dépôt: **10771463.6**

(22) Date de dépôt: **29.10.2010**

(51) Int Cl.:
*G01S 19/01* *(2010.01)*    *H04K 3/00* *(2006.01)*

(86) Numéro de dépôt international:
**PCT/EP2010/066519**

(87) Numéro de publication internationale:
**WO 2011/054763 (12.05.2011 Gazette 2011/19)**

(54) **PROCÉDÉ ET SYSTÈME POUR LE BROUILLAGE DE SIGNAUX GNSS**

VERFAHREN UND SYSTEM ZUR STÖRUNG VON GNSS-SIGNALEN

METHOD AND SYSTEM FOR JAMMING GNSS SIGNALS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.11.2009 FR 0905346**

(43) Date de publication de la demande:
**12.09.2012 Bulletin 2012/37**

(73) Titulaire: **Thales**
**92200 Neuilly Sur Seine (FR)**

(72) Inventeur: **HEURGUIER, Dominique**
**94170 Le Perreux-sur-Marne (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**DE-U1-202006 014 908    US-A1- 2008 001 818
US-A1- 2009 009 379**

• **BARRY PRICE ET AL: "SELECTIVE GPS
JAMMING", ION GPS 2000, 19-22 SEPTEMBER
2000, SALT LAKE CITY, UT,, 19 septembre 2000
(2000-09-19), pages 2096-2104, XP007914025,**

**Description**

La présente invention concerne un procédé et un système pour le brouillage de signaux de type GNSS (« Global Navigation Satellite System »). Ces signaux sont utilisés dans les systèmes de navigation par satellite et permettent à un récepteur mobile de déterminer ses coordonnées géographiques. Un des systèmes de navigation par satellite connu est le système américain GPS (« Global Positioning System ») mais l'invention s'applique à tout type de systèmes GNSS, notamment le système européen en cours de développement GALILEO.

Un brouilleur est un dispositif actif qui génère un signal de brouillage dont les caractéristiques permettent de perturber la réception d'un signal GNSS par un récepteur mobile. Une application possible de ce type de dispositif est de dérégler les moyens de navigation d'un véhicule. En particulier le brouillage des signaux GNSS permet de supprimer la connaissance, par le véhicule visé, de ses coordonnées géographiques.

Un brouilleur se caractérise le plus souvent par une antenne active dont la puissance est réglable et constitue un paramètre important. La puissance émise doit être suffisamment importante pour perturber le signal visé même si le récepteur associé est à une distance importante du brouilleur. A contrario, la puissance émise ne doit pas être trop importante pour ne pas impacter l'autonomie du dispositif de brouillage, ni générer trop d'effets collatéraux.

Un brouilleur évolué peut également générer un signal de brouillage adapté à une forme d'onde donnée de façon à prendre en compte au mieux les caractéristiques intrinsèques du signal que l'on souhaite perturber.

Considérons un espace géographique donné dans lequel se déplacent un premier groupe de récepteurs GNSS dont on souhaite perturber la réception d'un signal de positionnement par satellite tout en préservant un second groupe de récepteurs GNSS que l'on veut éviter de brouiller. De plus la puissance totale du ou des brouilleurs utilisés doit être optimale, car il ne faut pas de déperdition d'énergie pour économiser la puissance du ou des brouilleurs dans le but de préserver leur autonomie.

Les solutions de l'art antérieur ne permettent pas de déterminer de façon optimale le niveau de puissance d'un ensemble de brouilleurs utilisés dans le but de perturber un groupe de récepteurs GNSS. Elles entrainent le plus souvent un surdimensionnement de la puissance de brouillage qui n'est pas déterminée de façon adaptée au récepteur visé. Ce surdimensionnement a un impact direct sur l'autonomie des dispositifs de brouillage.
De plus, les solutions connues ne permettent pas de préserver un second groupe de récepteurs situés dans la même zone géographique. Au contraire, le signal de brouillage généré interfère sur tous les signaux qui utilisent des fréquences proches du signal à perturber. Les solutions actuelles conduisent donc à appliquer un brouillage vers une zone géographique donnée et à exclure de cette zone les récepteurs que l'on ne veut pas perturber.
On connait par ailleurs les documents DE202006014908 et XP007914025 qui concernent également le domaine des procédés de brouillage de signaux.

La présente invention propose une solution permettant de supprimer les limitations de l'art antérieur. L'effet du brouillage ainsi que ses contraintes sont modélisés selon une approche linéaire afin de déterminer une répartition optimale des puissances d'un ensemble de brouilleurs utilisés pour perturber un premier groupe de récepteurs. De plus l'invention permet également de prendre en compte la présence d'un second groupe de récepteurs à épargner, les deux groupes de récepteurs étant situés dans une zone géographique donnée. La puissance globale générée par l'ensemble de brouilleurs est minimisée de façon à ne pas gaspiller de ressources inutilement. Ainsi l'autonomie globale du système de brouillage est améliorée.

A cet effet l'invention a pour objet un procédé de brouillage, par un nombre K au moins égal à un, de brouilleurs, des signaux de type GNSS reçus par un premier groupe, comportant un nombre N au moins égal à un, de récepteurs mobiles i de positions connues au sein d'une zone géographique donnée, lesdits récepteurs mobiles étant adaptés à recevoir au moins un signal GNSS émis selon une forme d'onde donnée pour supporter un service l, lesdits brouilleurs k étant adaptés à générer au moins un signal de brouillage s de puissance $J_{k,s}$ au plus égale à une puissance maximale $J_{k\,max}$ ,ledit signal de brouillage étant adapté à brouiller ledit signal GNSS supportant le service l, ledit procédé étant caractérisé en ce qu'il comporte au moins les étapes suivantes :

o déterminer, pour chacun desdits récepteurs mobiles i et chacun des signaux GNSS reçus par ledit récepteur i, une marge de fonctionnement $\Delta N_{i,l} = \dfrac{G_l.C_l}{\eta.L_R} - N_{th}.F_R$ , en fonction du gain $G_l$ procuré par l'antenne dudit récepteur i sur le signal GNSS qu'il reçoit, de la puissance $C_l$ du signal GNSS reçu devant l'antenne dudit récepteur i, $L_R$ un terme modélisant les pertes de puissance internes audit récepteur i, $F_R$ le facteur de bruit dudit récepteur i, $N_{th}$ la puissance de bruit thermique qui affecte le signal GNSS reçu par ledit récepteur i et $\eta$ la valeur minimum du rapport signal à bruit plus interférence en dessous duquel ledit récepteur i ne reçoit plus ledit signal GNSS,
o déterminer, par une étape de calcul, la puissance optimale $J_{k,s}$ affectée à chaque signal de brouillage s produit par chacun desdits brouilleurs k et qui respecte les contraintes suivantes :

■ la puissance de brouillage totale $J = \sum_{k=1}^{K} \sum_{s=1}^{S} J_{k,s}$ est la plus faible possible, avec S le nombre de signaux de brouillage différents générés par ledit brouilleur k,

■ la contrainte de brouillage suivante est respectée pour chaque récepteur i et chaque service GNSS I utilisé par ledit récepteur i :

$$\sum_{k=1}^{K} \sum_{s=1}^{S} GE_{k,i}.P_{k,i}.SSC_{I_{k,s},l}.J_{k,s} / A_{k,i} \geq \Delta N_{i,l} \qquad i = 1,...,N \quad,$$

avec $GE_{k,i}$ le gain d'antenne du brouilleur k dans la direction dudit récepteur i, $P_{k,i}$ le niveau de réjection du signal de brouillage par l'antenne dudit brouilleur k, $A_{k,i}$ un terme modélisant les pertes de propagation entre le brouilleur k et le récepteur i, $SSC_{I_{k,s},l}$ le coefficient de corrélation spectral entre le signal de brouillage et le signal supportant le service I et reçu par ledit récepteur i.

Dans une variante de réalisation de l'invention, un second groupe, comportant un nombre M au moins égal à 1, de récepteurs mobiles de positions connues sont situés dans ladite zone géographique donnée et les puissances $J_{k,s}$ desdits signaux de brouillage émis par lesdits brouilleurs sont déterminées de façon à ce qu'ils n'affectent pas la réception correcte des services GNSS utilisés par lesdits récepteurs mobiles dudit second groupe, le procédé selon l'invention comportant les étapes supplémentaires suivantes :

o déterminer ledit seuil de fonctionnement $\Delta N_{i,s}$ pour chacun des récepteurs mobiles dudit second groupe,
o déterminer, par une étape de calcul, la puissance optimale $J_{k,s}$ affectée à chaque signal de brouillage s produit par chacun desdits brouilleurs k et qui respecte en plus les contraintes de non brouillage suivantes:

■ les inégalités suivantes sont respectées pour chaque récepteur i dudit second groupe et chaque service GNSS I utilisé par ledit récepteur i :

$$\sum_{k=1}^{K} \sum_{s=1}^{S} GE_{k,i}.P_{k,i}.SSC_{I_{k,s},l}.J_{k,s} / A_{k,i} \leq \Delta N_{i,l} \qquad i = N+1,...,N+M$$

Dans une variante de réalisation de l'invention, l'étape de calcul permettant de déterminer lesdites puissances optimales de brouillage $J_{k,s}$ est réalisée, si une solution existe, par l'exécution de l'algorithme du Simplexe appliqué aux contraintes suivantes :

$$\text{Max}(\ C^{t}.x)$$

$$A.x = b$$

$$x >= 0,$$

où Max($C^{t}.x$) désigne la contrainte selon laquelle le produit scalaire des vecteurs C transposé et x doit être maximum,

avec $x = \begin{bmatrix} J \\ E \end{bmatrix}$ un vecteur de dimension égale à K.S + (N1+ M1+ K) avec $J = \begin{bmatrix} \vdots \\ J_l \\ \vdots \end{bmatrix}$ un vecteur de dimension égale à K.S dont les composantes sont les puissances $J_l=J_{k,s}$ des dits brouilleurs, $E = \begin{bmatrix} \vdots \\ e_i \\ \vdots \end{bmatrix}$ un vecteur de dimension N1+M1+K dont les composantes sont des variables spécifiques à l'algorithme du simplexe, N1 est le nombre de contraintes de brouillage à respecter, 0< N1 <= N.S, M1 est le nombre de contraintes de non brouillage à respecter, 0 <= M1 <= M.S,

$C = \begin{bmatrix} [-1] \\ [0] \end{bmatrix}$ un vecteur de dimension K.S +N1+M1+ K avec [-1] un vecteur de dimension K.S dont toutes les composantes sont égales à -1 et [0] un vecteur de dimension N1+M1+K dont toutes les composantes sont égales à 0,

$A = \begin{bmatrix} \begin{bmatrix} -A_a \\ A_b \\ Q \end{bmatrix} & \begin{bmatrix} I_{N1} & 0 & 0 \\ 0 & I_{M1} & 0 \\ 0 & 0 & I_K \end{bmatrix} \end{bmatrix}$ une matrice de dimension (N1+M1+K) x (K.S+N1+M1+K), avec

$A_a = \begin{bmatrix} & \vdots & \\ \dots & \alpha_{i,l} & \dots \\ & \vdots & \end{bmatrix}$ et $\alpha_{i,l} = GE_{k,i}.P_{k,i}.SSC_{l,i} \, / \, A_{k,i}$ avec i variant de 1 à N.S et l variant de 1 à K.S,

$A_b = \begin{bmatrix} & \vdots & \\ \dots & \beta_{i,l} & \dots \\ & \vdots & \end{bmatrix}$ et $\beta_{i,l} = GE_{k,i}.P_{k,i}.SSC_{l,i} \, / \, A_{k,i}$ avec i variant de N.S +1 à (N+M).S et l variant de 1 à K.S, si au moins une condition de non brouillage existe, sinon $A_b$ est nulle,
$I_{N1}$ est la matrice identité de dimension N1xN1,
$I_{m1}$ est la matrice identité de dimension M1xM1,

$I_K$ est la matrice identité de dimension KxK, $Q = \begin{bmatrix} & \vdots & \\ \dots & q_{i,j} & \dots \\ & \vdots & \end{bmatrix}$ avec $q_{i,j}$ = 1 pour j variant de (i-1).S+1 à i.S et $q_{i,j}$

= 0 sinon, $b = \begin{bmatrix} -D_a \\ D_b \\ J\max \end{bmatrix}$ avec $D_a = \begin{bmatrix} \vdots \\ \Delta N_i \\ \vdots \end{bmatrix}$ un vecteur de dimension N1 dont les composantes sont les seuils

de fonctionnement $\Delta N_{i,s}$ de chaque récepteur GNSS dudit premier groupe, $D_b = \begin{bmatrix} \vdots \\ \Delta N_i \\ \vdots \end{bmatrix}$ un vecteur de dimension M1 dont les composantes sont les seuils de fonctionnement $\Delta N_i$ de chaque récepteur GNSS dudit second groupe,

$J_{\max} = \begin{bmatrix} \vdots \\ Jk_{\max} \\ \vdots \end{bmatrix}$ un vecteur de dimension K dont les composantes sont les puissances maximales de chacun des brouilleurs.

L'invention a également pour objet un système de brouillage comportant une pluralité de brouilleurs adaptés à générer au moins un signal de brouillage permettant de perturber le signal reçu par au moins un récepteur mobile de type GNSS et un organe centralisé arrangés en réseau par des moyens de communication, ledit système étant caractérisé en ce que ledit organe centralisé comporte des moyens pour exécuter les étapes du procédé selon l'invention.

D'autres caractéristiques apparaîtront à la lecture de la description détaillée donnée à titre d'exemple et non limitative qui suit faite en regard d'un dessin annexé qui représente :

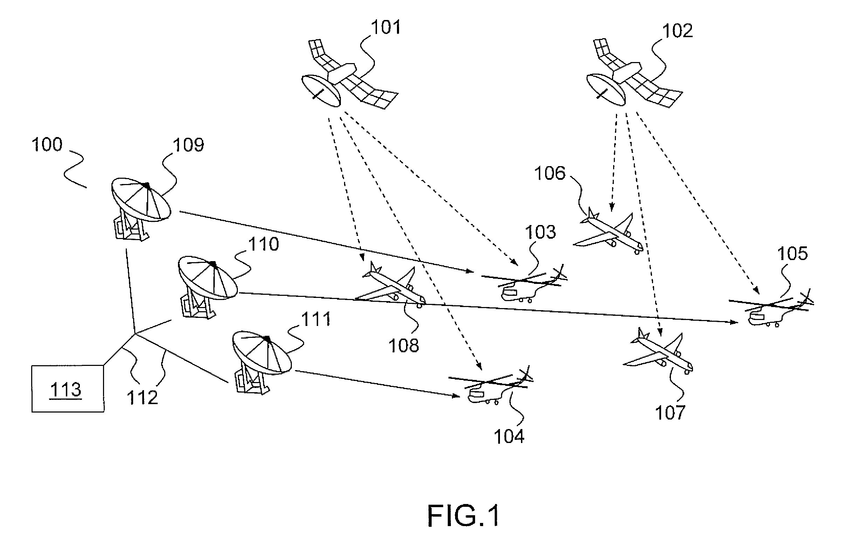

La figure 1, un schéma du système de brouillage selon l'invention mis en oeuvre sur une zone géographique dans laquelle se déplace une pluralité de récepteurs GNSS.

Le procédé de brouillage selon l'invention est basé sur une modélisation linéaire globale du problème relatif au brouillage d'un nombre N de récepteurs GNSS avec un réseau comportant un nombre K de brouilleurs. L'introduction d'une modélisation linéaire permet ensuite de résoudre le problème en appliquant l'algorithme du simplexe, connu de l'Homme du métier. En outre, le procédé selon l'invention permet de prendre en compte la présence éventuelle d'un nombre M de récepteurs GNSS que le brouillage ne doit pas affecter.

Plus précisément, l'invention consiste à mettre en oeuvre une modélisation linéaire de l'effet cumulé des interférences, de formaliser le problème de minimisation de la puissance totale de brouillage émise puis de déterminer une solution optimale, si elle existe, qui permette de rendre inopérant les N récepteurs GNSS à brouiller tout en assurant le fonctionnement des M autres récepteurs GNSS à préserver.

*Modèle linéaire d'interférence d'un récepteur GNSS*

Le comportement d'un récepteur peut de façon générale être défini par un seuil de fonctionnement $\eta$ et un rapport signal à bruit SNR, en anglais « Signal to Noise Ratio ». En première approximation, le récepteur ne fonctionne que si, et seulement si, le rapport signal à bruit SNR est supérieur au seuil $\eta$. En présence d'interférence volontaire ou involontaire, on définit le rapport signal à bruit plus interférence SNIR, en anglais « Signal to Noise & Interference Ratio ».

En supposant que le récepteur GNSS est idéal, et en présence d'une source d'interférence, par exemple un brouilleur, le rapport signal à bruit plus interférence en sortie de la chaîne de traitement interne au récepteur GNSS peut être exprimé par la relation suivante :

$$SINR = \frac{G_S.C_s / L_R}{N_{th}.F_R + SSC_{I,S}.C_I} \quad (1),$$

Où :

$G_s$ est le gain procuré par l'antenne, ou le réseau antennaire, du récepteur sur le signal utile reçu par ce même récepteur,

$C_s$ est la puissance du signal utile devant l'antenne du récepteur,

$L_r$ est un terme qui modélise les pertes internes au récepteur,

$N_{th}$ est la puissance de bruit thermique,

$F_r$ est le facteur de bruit du récepteur,

$C_I$ est la puissance du signal interférant devant le récepteur,

$SSC_{I,S}$ est le coefficient de corrélation spectral entre le signal interférant I et le signal utile S. Sa valeur est comprise entre 0 et 1 et est donnée par la relation suivante :

$$SSC_{I,S} = \int_{-\infty}^{+\infty} \Phi_S(f).\Phi_I(f) df \quad (2)$$

Où :

$\Phi_S(f)$ est la densité spectrale normalisée de puissance du signal utile S

$\Phi_I(f)$ est la densité spectrale normalisée de puissance du signal interférant I

Tous les termes de la relation (1) sont supposés connus, soit par mesure ou caractérisation du récepteur GNSS, soit en prenant l'hypothèse la plus pessimiste.

En présence d'un bruit thermique stationnaire, le seuil de fonctionnement du récepteur GNSS peut se traduire par une marge de tolérance sur la puissance du signal interférant tel que l'illustrent les relations suivantes :

$$\text{SINR} > \eta \Leftrightarrow SSC_{I,S}.C_I < \Delta N \ (3)$$

$$\text{Avec } \Delta N = \frac{G_S.C_s}{\eta.L_R} - N_{th}.F_R$$

Dans le cas où l'interférence sur le récepteur GNSS est causée par un signal de brouillage de puissance d'émission $J_k$, la puissance du signal interférant devant le récepteur s'écrit :

$$C_I = GE_k.P_k.J_k / A_k \ (4),$$

Où :

$GE_k$ est le gain d'antenne du brouilleur dans la direction du récepteur GNSS,
$P_k$ est le niveau de réjection par l'antenne du signal interférant I,
$A_k$ est un terme modélisant les pertes de propagation entre le brouilleur et le récepteur.

Ces trois derniers termes sont supposés connus de l'utilisateur du système de brouillage selon l'invention.
En combinant les relations (1) et (4) on obtient une nouvelle formule du rapport signal à bruit plus interférences :

$$SINR = \frac{G_S.C_s / L_R}{N_{th}.F_R + GE_k.P_k.SSC_{I,S}.J_k / A_k} \ (5)$$

La relation (3) donne la puissance minimale de brouillage requise pour que le récepteur GNSS ne fonctionne plus, ou la puissance maximale pour qu'il ne soit pas perturbé.

*Modèle linéaire du brouillage multiple d'un récepteur de service GNSS*

Dans le cas où un nombre K de signaux de brouillage est considéré, le niveau d'interférence résultant en sortie de la chaine de traitement du récepteur est égal à la somme des niveaux d'interférence individuels, la relation (5) devient alors :

$$SINR = \frac{G_S.C_s / L_R}{N_{th}.F_R + \sum_{k=1}^{K} GE_k.P_k.SSC_{I,S}.J_k / A_k} \ (6)$$

La condition de fonctionnement du récepteur, modélisée par la relation (3) dans le cas d'un seul brouilleur, devient alors :

$$\sum_{k=1}^{K} GE_k.P_k.SSC_{I,S}.J_k / A_k < \Delta N \ (7)$$

$$\text{Avec } \Delta N = \frac{G_S.C_s}{\eta.L_R} - N_{th}.F_R$$

Réciproquement, la condition de non fonctionnement du récepteur s'écrit :

$$\sum_{k=1}^{K} GE_k . P_k . SSC_{I,S} . J_k / A_k > \Delta N \quad (8)$$

La puissance globale de brouillage mise en oeuvre est égale à $J_{tot} = \sum_{k=1}^{K} J_k$

*Modélisation du problème d'optimisation*

Le contexte dans lequel se positionne l'invention est le suivant. Il concerne un système de brouillage fixe constitué d'un nombre K de brouilleurs de puissances maximales données. Les brouilleurs sont de positions et d'orientations connues. Ce système de brouillage a pour objectif de perturber un nombre N de récepteurs GNSS tout en préservant le fonctionnement d'un autre groupe de récepteurs GNSS contenant M unités. Les positions et les caractéristiques de tous les récepteurs GNSS sont supposées connues. Le problème technique que vise à résoudre l'invention est formulé de la façon suivante.

Existe-t-il une solution de brouillage, c'est-à-dire une configuration de brouillage qui respecte les contraintes de puissance maximum, le brouillage des N récepteurs cible et l'absence de brouillage collatéral des M récepteurs à préserver? Si plusieurs solutions existent, quelle est celle qui minimise la puissance globale émise par le système de brouillage ?

Afin de répondre au problème technique précédent, les puissances $J_k$ des brouilleurs doivent respecter les contraintes suivantes.

La puissance globale J doit être minimisée, c'est-à-dire qu'elle doit être la plus faible possible tout en respectant les autres contraintes liées au problème ce qui se traduit par la contrainte suivante :

$$\min_{\{J_k\}} \left( \sum_{k=1}^{K} J_k \right) \quad (9)$$

Pour chaque récepteur GNSS indexé par l'indice i et que l'on souhaite brouilleur, l'inégalité suivante doit être respectée :

$$\sum_{k=1}^{K} GE_{k,i} . P_{k,i} . SSC_{I_k,S_i} . J_k / A_{k,i} \geq \Delta N_i \qquad i = 1,...,N \quad (10)$$

De façon analogue, pour chaque récepteur GNSS d'indice i variant de N+1 à N+M, que l'on souhaite préserver, l'inégalité suivante doit être respectée :

$$\sum_{k=1}^{K} GE_{k,i} . P_{k,i} . SSC_{I_k,S_i} . J_k / A_{k,i} \leq \Delta N_i \qquad i = N+1,...,N+M \quad (11)$$

Il est à noter que dans le mode de réalisation le plus général de l'invention, le nombre M de récepteurs à préserver peut être nul, dans ce cas les inéquations (11) sont inexistantes.

Le seuil de tolérance $\Delta N_i$ est donné, pour chaque récepteur d'indice i, par la relation (7). Tous les termes indicés par k sont des paramètres caractérisant le brouilleur d'indice k. Tous les termes indicés par i sont des paramètres caractérisant le récepteur GNSS d'indice i. Certains termes comme le coefficient de corrélation spectral $SSC_{I_k,S_i}$ et le terme $A_{k,i}$ caractérisant les pertes de propagation entre le brouilleur et le récepteur sont des paramètres qui dépendent à la fois du brouilleur d'indice k et du récepteur GNSS d'indice i. Tous les termes des inéquations (10) sont supposés connus soit par mesure soit par hypothèse, sauf les puissances des brouilleurs $J_k$ qui sont déterminées par le procédé selon l'invention.

Pour chaque brouilleur d'indice k, une puissance maximale $J_k$ max existe et doit être prise en compte dans la détermination de la solution. Une inégalité supplémentaire est donc introduite :

$$J_k \leq J_{k\,\max} \qquad k = 1..K$$

La modélisation du problème selon les relations (9), (10) et (11) conduit donc à introduire un nombre égal à N+M+K contraintes dont N contraintes de brouillage, M contraintes de non brouillage et K contraintes sur les puissances des brouilleurs.

*Mise sous forme standard pour résolution par l'algorithme du simplexe*

Le problème d'optimisation traduit par les relations (9), (10) et (11) peut se réécrire sous la forme matricielle standard de l'algorithme du simplexe qui est une méthode de programmation linéaire connue de l'Homme du métier. Ainsi les relations précédentes s'écrivent sous la forme suivante :

$$\text{Max}(\ C^t.x)\ (12)$$

Sous les contraintes :

$$A.x = b\ (13)$$

$$x >= 0\ (14)$$

Où $\text{Max}(C^t.x)$ représente le maximum du produit scalaire entre le transposé du vecteur C et le vecteur x. b est un vecteur, A est une matrice.

Le lien entre les relations (9),(10),(11) et (12),(13),(14) se fait en assignant aux variables des relations (12),(13),(14) les valeurs suivantes. $x = \begin{bmatrix} J \\ E \end{bmatrix}$ est un vecteur de dimension égale à K + (N+M+K) avec $J = \begin{bmatrix} \vdots \\ J_l \\ \vdots \end{bmatrix}$ un vecteur de dimension égale à K dont les composantes sont les puissances $J_k$ de chaque brouilleur, $E = \begin{bmatrix} \vdots \\ e_i \\ \vdots \end{bmatrix}$ un vecteur de dimension N+M+K dont les composantes sont des variables spécifiques à l'algorithme du simplexe. $C = \begin{bmatrix} [-1] \\ [0] \end{bmatrix}$ est un vecteur de dimension K +N+M+K avec [-1] un vecteur de dimension K dont toutes les composantes sont égales à -1 et [0] un vecteur de dimension N+M+K dont toutes les composantes sont égales à 0.

La contrainte (12) est ainsi équivalente à la contrainte (9).

On pose ensuite $A = \begin{bmatrix} \begin{bmatrix} -A_a \\ A_b \\ I_K \end{bmatrix} & \begin{bmatrix} I_N & 0 & 0 \\ 0 & I_M & 0 \\ 0 & 0 & I_K \end{bmatrix} \end{bmatrix}$ qui est une matrice de dimension (N+M+K) x (N+M+2K) avec : $A_a = \begin{bmatrix} \vdots \\ \dots & \alpha_{i,k} & \dots \\ \vdots \end{bmatrix}$ et $a_{i,k} = GE_{k,i}.P_{k,i}.SSC_{k,i} / A_{k,i}$ pour l variant de 1 à N et k variant de 1 à

K, $A_b = \begin{bmatrix} \vdots \\ \dots & \beta_{i,k} & \dots \\ \vdots \end{bmatrix}$ et $\beta_{i,k} = GE_{k,i}.P_{k,i}.SSC_{k,i} / A_{k,i}$ pour I variant de N+1 à N+M et k variant de 1 à K,

$I_N$ est la matrice identité de dimension NxN,

$I_M$ est la matrice identité de dimension MxM,

$I_K$ est la matrice identité de dimension KxK.

Enfin le vecteur b est un vecteur de dimension N+M+K donné

$$b = \begin{bmatrix} -D_a \\ D_b \\ J\max \end{bmatrix}$$

avec $D_a = \begin{bmatrix} \vdots \\ \Delta N_i \\ \vdots \end{bmatrix}$ un vecteur de dimension N dont les composantes sont les seuils de tolérance $\Delta N_i$ de chaque

récepteur GNSS à brouiller, $D_b = \begin{bmatrix} \vdots \\ \Delta N_i \\ \vdots \end{bmatrix}$ un vecteur de dimension M dont les composantes sont les seuils de

tolérance $\Delta N_i$ de chaque récepteur GNSS à préserver, $J_{\max} = \begin{bmatrix} \vdots \\ Jk_{\max} \\ \vdots \end{bmatrix}$ un vecteur de dimension K dont les composantes sont les puissances maximales de chacun des brouilleurs.

Avec les définitions précédentes, les relations (13) et (14) sont équivalentes aux relations (10) et (11) ainsi qu'à la contrainte de puissance maximale de chaque brouilleur.

Une fois les relations (13) et (14) établies sous la contrainte (12), l'algorithme du simplexe, connu de l'Homme du métier peut s'appliquer afin de déterminer si le problème posé possède des solutions et lorsque c'est le cas, de déterminer une solution de brouillage de puissance globale minimale. L'algorithme du simplexe est une méthode créée par George Dantzig dans les années 50 pour résoudre les problèmes de programmation linéaire. Etant donné un ensemble d'inégalités linéaires sur n variables réelles, l'algorithme permet de trouver la solution optimale pour une fonction de coût donnée qui est elle aussi linéaire.

*Modélisation du problème d'optimisation pour plusieurs services*

Dans une variante de réalisation de l'invention, les récepteurs GNSS utilisent différents services de navigation qui diffèrent par leur performance, leur qualité et leur accessibilité et qui se caractérisent par un signal de puissance, de forme d'onde et de fréquence donnée.

On considère par la suite un nombre S de services différents.

Les brouilleurs ont également la capacité de générer un signal de brouillage adapté à chacun desdits services. On parle dans ce cas de forme d'onde de brouillage. Chaque brouilleur peut être paramétré pour émettre une ou plusieurs formes d'onde de brouillage avec des puissances respectives différentes. La configuration de brouillage de chaque brouilleur représente la liste des puissances allouées à chaque forme d'onde de brouillage.

La modélisation du problème précédemment décrite concerne le cas ou les brouilleurs n'ont la capacité de générer qu'une seule forme d'onde de brouillage adaptée à perturber un seul service utilisé par le récepteur GNSS. Dans le cas où plusieurs services sont considérés, les relations (9),(10) et (11) deviennent, en intégrant la dimension du service en supplément :

$$\min_{\{J_{k,s}\}}\left(\sum_{k=1}^{K}\sum_{s=1}^{S}J_{k,s}\right) \quad \text{(9')}$$

Pour chaque récepteur GNSS indexé par l'indice i et que l'on souhaite brouiller et pour chaque service indicé par la variable I et utilisé par le récepteur, l'inégalité suivante doit être respectée :

$$\sum_{k=1}^{K}\sum_{s=1}^{S}GE_{k,i}.P_{k,i}.SSC_{I_{k,s},I}.J_{k,s}\,/\,A_{k,i}\geq\Delta N_{i,I} \qquad i=1,...,N \quad \text{(10')}$$

De façon analogue, pour chaque récepteur GNSS d'indice i variant de N+1 à N+M, que l'on souhaite préserver et pour chaque service I utilisé par le récepteur, l'inégalité suivante doit être respectée :

$$\sum_{k=1}^{K}\sum_{s=1}^{S}GE_{k,i}.P_{k,i}.SSC_{I_{k,s},I}.J_{k,s}\,/\,A_{k,i}\leq\Delta N_{i,I} \qquad i=N+1,...,N+M \quad \text{(11')}$$

Enfin la somme des puissances allouées à chaque forme d'onde de brouillage ne doit pas dépasser la puissance maximale du brouilleur ce qui se traduit par la relation suivante :

$$\sum_{s=1}^{S}J_{k,s}\leq J_{k\max} \qquad k=1..K \quad \text{(15)}$$

La modélisation du problème selon les relations (9'), (10'), (11') et (15) conduit donc à introduire un nombre égal à N1+M1+K contraintes dont N1 contraintes de brouillage avec N1<= NxS, M1 contraintes de non brouillage avec M1 <= MxS et K contraintes sur les puissances des brouilleurs.

*Mise sous forme standard pour résolution par l'algorithme du simplexe dans le cas de plusieurs services*

La résolution du problème d'optimisation dans le cas où plusieurs services sont considérés se réécrit sous la même forme que pour le cas d'un unique service, c'est-à-dire par l'intermédiaire des relations (12),(13) et (14) avec les différences suivantes dans la définition des variables.

Le vecteur J devient $J = \begin{bmatrix} \vdots \\ J_I \\ \vdots \end{bmatrix}$ avec I=k,s k variant de 1 à K et s variant de 1 à S. Ce vecteur est de dimension KxS.

Le vecteur E est de dimension N1+M1+K
Le vecteur C comporte KxS composantes égales à -1 et N1+M1+K composantes égales à 0.
La matrice A est de dimension (N1+M1+K)x(K.S +N1+M1+K),

$$A = \begin{bmatrix} \begin{bmatrix} -A_a \\ A_b \\ Q \end{bmatrix} & \begin{bmatrix} I_{N1} & 0 & 0 \\ 0 & I_{M1} & 0 \\ 0 & 0 & I_K \end{bmatrix} \end{bmatrix}$$

La composante $\alpha_{i,I}$ de la matrice $A_a$ est égale à $\alpha_{i,I} = GE_{k,i}.P_{k,i}.SSC_{I,i}\,/\,A_{k,i}$ avec i variant de 1 à N.S et I variant de 1 à K.S.
La composante $\beta_{i,I}$ de la matrice $A_b$ est égale à $\beta_{i,I} = GE_{k,i}.P_{k,i}.SSC_{I,i}\,/\,A_{k,i}$ avec i variant de N.S +1 à (N+M).S et I variant de 1 à K.S.

La matrice Q est égale à $Q = \begin{bmatrix} & \vdots & \\ \ldots & q_{i,j} & \ldots \\ & \vdots & \end{bmatrix}$ avec $q_{i,j}$ = 1 pour j variant de (i-1).S+1 à i.S et $q_{i,j}$ = 0 sinon.

$I_{N1}$ est la matrice identité de dimension N1xN1,

$I_{M1}$ est la matrice identité de dimension M1xM1,

$I_K$ est la matrice identité de dimension KxK.

b est un vecteur identique à celui définie pour le cas d'un unique service mis à part que le vecteur $D_a$ est de dimension N1 et le vecteur $D_b$ est de dimension M1.

L'algorithme du simplexe s'applique ensuite de la même façon que pour le cas où un unique service est considéré.

La figure 1 illustre un exemple de mise en oeuvre du procédé selon l'invention. Un ensemble de véhicules mobiles, dans l'exemple décrit des aéronefs, sont équipés de récepteurs GNSS par l'intermédiaire duquel ils reçoivent les signaux, d'un ou plusieurs services, provenant d'une pluralité de satellites 101,102. Le procédé selon l'invention a pour objectif de dénier les services GNSS d'un premier groupe de récepteurs mobiles 103,104,105,c'est à dire de brouiller la réception des signaux supportant ces services et provenant des satellites 101,102, tout en préservant les services GNSS d'un second groupe de récepteurs mobiles 106,107,108, c'est à dire en garantissant une réception correcte des signaux supportant ces services et provenant desdits satellites 101,103 et à destination. Un système de brouillage 100 selon l'invention est composé d'une pluralité de brouilleurs 109,110,111, disposés en réseau au moyen de liens de communications 112 qui leur permet de communiquer entre eux et vers un organe centralisé 113. Cet organe 113 comporte au moins une fonction d'observation qui a pour objectif de déterminer ou de recevoir depuis un dispositif externe au système les positions des différents véhicules mobiles 103,104,105,106,107,108 situés dans une zone géographique donnée. A partir de ces positions, des caractéristiques des récepteurs GNSS embarqués dans lesdits véhicules mobiles et des caractéristiques des brouilleurs 109,110,111, l'organe centralisé 113 exécute le procédé selon l'invention afin de déterminer la répartition des puissances de brouillage sur l'ensemble des brouilleurs 109,110,111 disponibles, ainsi que l'allocation de puissance affectée à chaque forme d'onde de brouillage exploitée par chacun desdits brouilleurs.

Une fois la liste des puissances déterminées, l'organe centralisé 113 communique cette liste aux brouilleurs 109,110,111, par l'intermédiaire des moyens de communication 112. Si aucune solution n'est trouvée à l'issu de la mise en oeuvre du procédé selon l'invention, alors l'organe centralisé 113 communique aux brouilleurs 109,110,111 une valeur par défaut de la puissance qu'ils doivent utiliser.

Dans une variante de réalisation de l'invention, si aucune solution n'est trouvée ou si les besoins spécifiés ne nécessitent pas d'épargner certains récepteurs de l'effet du brouillage, les contraintes qui consistent à préserver un nombre M de récepteurs GNSS peuvent être relâchées, ce qui revient à supprimer de la formulation du problème les inéquations (11) ou (11'). L'algorithme du simplexe est exécuté à partir des nouvelles contraintes relâchées afin de déterminer une liste de puissances qui résolvent le problème posé. La suppression des inéquations (11) et (11') entraine alors une valeur nulle du nombre M ou $M_1$ de contraintes de non brouillage.

**Revendications**

1. Procédé de brouillage, par un nombre K au moins égal à un, de brouilleurs, des signaux de type GNSS reçus par un premier groupe, comportant un nombre N au moins égal à un, de récepteurs mobiles i de positions connues au sein d'une zone géographique donnée, lesdits récepteurs mobiles étant adaptés à recevoir au moins un signal GNSS émis selon une forme d'onde donnée pour supporter un service I, lesdits brouilleurs k étant adaptés à générer au moins un signal de brouillage s de puissance $J_{k,s}$ au plus égale à une puissance maximale $J_{k\,max}$, ledit signal de brouillage étant adapté à brouiller ledit signal GNSS supportant le service I, ledit procédé étant **caractérisé en ce qu'**il comporte au moins les étapes suivantes :

   o déterminer, pour chacun desdits récepteurs mobiles i et chacun des signaux GNSS reçus par ledit récepteur i, une marge de fonctionnement $\Delta N_{i,l} = \dfrac{G_l.C_l}{\eta.L_R} - N_{th}.F_R$ , en fonction du gain $G_l$ procuré par l'antenne dudit récepteur i sur le signal GNSS qu'il reçoit, de la puissance $C_l$ du signal GNSS reçu devant l'antenne dudit récepteur i, $L_R$ un terme modélisant les pertes de puissance internes audit récepteur i, $F_R$ le facteur de bruit dudit récepteur i, $N_{th}$ la puissance de bruit thermique qui affecte le signal GNSS reçu par ledit récepteur i et $\eta$ la valeur minimum du rapport signal à bruit plus interférence en dessous duquel ledit récepteur i ne reçoit plus ledit signal GNSS,

o déterminer, par une étape de calcul, la puissance optimale $J_{k,s}$ affectée à chaque signal de brouillage s produit par chacun desdits brouilleurs k et qui respecte les contraintes suivantes :

- la puissance de brouillage totale $J = \sum_{k=1}^{K} \sum_{s=1}^{S} J_{k,s}$ est la plus faible possible, avec S le nombre de signaux de brouillage différents générés par ledit brouilleur k,
- la contrainte de brouillage suivante est respectée pour chaque récepteur i et chaque service GNSS 1 utilisé par ledit récepteur i:

$$\sum_{k=1}^{K} \sum_{s=1}^{S} GE_{k,i}.P_{k,i}.SSC_{I_{k,s},l}.J_{k,s} / A_{k,i} \geq \Delta N_{i,l} \qquad i = 1,...,N \, ,$$

avec $GE_{k,i}$ le gain d'antenne du brouilleur k dans la direction dudit récepteur i, $P_{k,i}$ le niveau de réjection du signal de brouillage par l'antenne dudit brouilleur k, $A_{k,i}$ un terme modélisant les pertes de propagation entre le brouilleur k et le récepteur i, $SSC_{I_{k,s},l}$ le coefficient de corrélation spectral entre le signal de brouillage et le signal supportant le service I et reçu par ledit récepteur i.

2. Procédé selon la revendication 1 **caractérisé en ce qu'**un second groupe, comportant un nombre M au moins égal à 1, de récepteurs mobiles de positions connues sont situés dans ladite zone géographique donnée et que les puissances $J_{k,s}$ desdits signaux de brouillage émis par lesdits brouilleurs sont déterminées de façon à ce qu'ils n'affectent pas la réception correcte des services GNSS utilisés par lesdits récepteurs mobiles dudit second groupe, ledit procédé comportant les étapes supplémentaires suivantes :

o déterminer ledit seuil de fonctionnement $\Delta N_{i,s}$ pour chacun des récepteurs mobiles dudit second groupe,
o déterminer, par une étape de calcul, la puissance optimale $J_{k,s}$ affectée à chaque signal de brouillage s produit par chacun desdits brouilleurs k et qui respecte en plus les contraintes de non brouillage suivantes:

- les inégalités suivantes sont respectées pour chaque récepteur i dudit second groupe et chaque service GNSS I utilisé par ledit récepteur i :

$$\sum_{k=1}^{K} \sum_{s=1}^{S} GE_{k,i}.P_{k,i}.SSC_{I_{k,s},l}.J_{k,s} / A_{k,i} \leq \Delta N_{i,l} \qquad i = N+1,...,N+M$$

3. Procédé selon l'une des revendications précédentes **caractérisé en ce que** ladite étape de calcul permettant de déterminer lesdites puissances optimales de brouillage $J_{k,s}$ est réalisée, si une solution existe, par l'exécution de l'algorithme du Simplexe appliqué aux contraintes suivantes :

$$Max( C^t.x)$$

$$A.x = b$$

$$x >= 0,$$

où $Max(C^t.x)$ désigne la contrainte selon laquelle le produit scalaire des vecteurs C transposé et x doit être maximum,

avec $x = \begin{bmatrix} J \\ E \end{bmatrix}$ un vecteur de dimension égale à K.S + (N1+ M1 + K) avec $J = \begin{bmatrix} \vdots \\ J_l \\ \vdots \end{bmatrix}$ un vecteur de dimension égale à K.S dont les composantes sont les puissances $J_l = J_{k,s}$ des dits brouilleurs, $E = \begin{bmatrix} \vdots \\ e_i \\ \vdots \end{bmatrix}$ un vecteur de dimension N1+M1+K dont les composantes sont des variables spécifiques à l'algorithme du simplexe, N1 est le nombre de contraintes de brouillage à respecter, 0< N1 <= N.S, M1 est le nombre de contraintes de non brouillage à respecter, 0 <= M1 <= M.S, $C = \begin{bmatrix} [-1] \\ [0] \end{bmatrix}$ un vecteur de dimension K.S +N1+M1+K avec

[-1] un vecteur de dimension K.S dont toutes les composantes sont égales à -1 et [0] un vecteur de dimension N1+M1+K dont toutes les composantes sont égales à 0, $A = \begin{bmatrix} \begin{bmatrix} -A_a \\ A_b \\ Q \end{bmatrix} & \begin{bmatrix} I_{N1} & 0 & 0 \\ 0 & I_{M1} & 0 \\ 0 & 0 & I_K \end{bmatrix} \end{bmatrix}$ une matrice de

dimension (N1+M1+K) x (K.S+N1+M1+K), avec $A_a = \begin{bmatrix} \vdots \\ \dots & \alpha_{i,l} & \dots \\ \vdots \end{bmatrix}$ et $\alpha_{i,l} = GE_{k,i}.P_{k,i}.SSC_{l,i} / A_{k,i}$ avec i variant de 1 à N.S et I variant de 1 à K.S, $A_b = \begin{bmatrix} \vdots \\ \dots & \beta_{i,l} & \dots \\ \vdots \end{bmatrix}$ et $\beta_{i,l} = GE_{k,i}.SSC_{l,i} / A_{k,i}$ avec i variant de N.S +1 à (N+M).S et I variant de 1 à K.S, si au moins une condition de non brouillage existe, sinon $A_b$ est nulle,
$I_{N1}$ est la matrice identité de dimension N1xN1,
$I_{M1}$ est la matrice identité de dimension M1xM1,

$I_K$ est la matrice identité de dimension KxK, $Q = \begin{bmatrix} \vdots \\ \dots & q_{i,j} & \dots \\ \vdots \end{bmatrix}$ avec $q_{i,j} = 1$ pour j variant de (i-1).S+1 à i.S et

$q_{i,j} = 0$ sinon, $b = \begin{bmatrix} -D_a \\ D_b \\ J\max \end{bmatrix}$ avec $D_a = \begin{bmatrix} \vdots \\ \Delta N_i \\ \vdots \end{bmatrix}$ un vecteur de dimension N1 dont les composantes sont les

seuils de fonctionnement $\Delta N_{i,s}$ de chaque récepteur GNSS dudit premier groupe, $D_b = \begin{bmatrix} \vdots \\ \Delta N_i \\ \vdots \end{bmatrix}$ un vecteur de

dimension M1 dont les composantes sont les seuils de fonctionnement $\Delta N_i$ de chaque récepteur GNSS dudit second

groupe, $J_{\max} = \begin{bmatrix} \vdots \\ Jk_{\max} \\ \vdots \end{bmatrix}$ un vecteur de dimension K dont les composantes sont les puissances maximales de chacun des brouilleurs.

4. Système de brouillage (100) comportant une pluralité de brouilleurs (109,110,111) adaptés à générer au moins un signal de brouillage permettant de perturber le signal reçu par au moins un récepteur mobile de type GNSS et un organe centralisé (113) arrangés en réseau par des moyens de communication (112), ledit système étant **caractérisé en ce que** ledit organe centralisé (113) comporte des moyens pour exécuter les étapes du procédé selon l'une des revendications 1 à 3.

**Patentansprüche**

1. Verfahren zum Stören, durch eine Anzahl K von wenigstens gleich eins von Störern, von Signalen des GNSS-Typs, die von einer ersten Gruppe empfangen wurden, die eine Anzahl N von wenigstens gleich eins von mobilen Empfängern i mit bekannten Positionen in einem gegebenen geografischen Bereich umfasst, wobei die mobilen Empfänger zum Empfangen von wenigstens einem GNSS-Signal ausgelegt sind, das gemäß einer gegebenen Wellenform gesendet wurde, um einen Dienst I zu unterstützen, wobei die Störer k zum Erzeugen wenigstens eines Störsignals s mit einer Leistung $J_{k,s}$ ausgelegt sind, die höchstens gleich einer maximalen Leistung $J_{k \max}$ ist, wobei das Störsignal zum Stören des den Dienst I unterstützenden GNSS-Signals ausgelegt ist, wobei das Verfahren **dadurch gekennzeichnet ist, dass** es wenigstens die folgenden Schritte beinhaltet:

◦ Bestimmen, für jeden der mobilen Empfänger i und jedes der von dem Empfänger i empfangenen GNSS-Signale, einer Betriebsmarge $\Delta N_{i,I} = \dfrac{G_I . C_I}{\eta . L_R} - N_{th} . F_R$ in Abhängigkeit von dem von der Antenne des Empfängers i an dem von ihm empfangenen GNSS-Signal erzielten Gewinn $G_I$, der Leistung $C_I$ des empfangenen GNSS-Signals vor der Antenne des Empfängers i, wobei $L_R$ ein Term ist, der die Leistungsverluste innerhalb des Empfängers i modelliert, wobei $F_R$ der Rauschfaktor des Empfängers i ist, $N_{th}$ die thermische Rauschleistung ist, die das vom Empfänger i empfangene GNSS-Signal beeinflusst, und $\eta$ der Mindestwert des Signal-Interferenzplus-Rauschen-Verhältnisses ist, unterhalb dessen der Empfänger i das GNSS-Signal nicht mehr empfängt;
◦ Bestimmen, mit einem Rechenschritt, der optimalen Leistung $J_{k,s}$, die jedem von jedem der Störer k erzeugten Störsignal s zugeordnet ist und die die folgenden Einschränkungen einhält:

▪ die Gesamtstörleistung $J = \displaystyle\sum_{k=1}^{K} \sum_{s=1}^{S} J_{k,s}$ ist so gering wie möglich, wobei S die Anzahl von von dem Störer k erzeugten unterschiedlichen Störsignalen ist;
▪ die folgende Störbeschränkung wird für jeden Empfänger i und jeden von dem Empfänger i benutzten GNSS I Service einhält:

$$\sum_{k=1}^{K} \sum_{s=1}^{S} GE_{k,i} . P_{k,i} . SSC_{I_{k,s},I} . J_{k,s} / A_{k,i} \geq \Delta N_{i,I} \qquad i = 1, ..., N$$

wobei $GE_{k,i}$ der Antennengewinn des Störers k in Richtung des Empfängers i ist, $P_{k,i}$ das Rückweisungsniveau des Störsignals durch die Antenne des Störers k ist, $A_{k,i}$ ein Term ist, der die Ausbreitungsverluste zwischen dem Störer k und dem Empfänger i modelliert, wobei $SSC_{I_{k,s},I}$ der spektrale Korrelationskoeffizient zwischen dem Störsignal und dem Signal ist, das den Service I unterstützt und vom Empfänger i empfangen wird.

2. Verfahren nach Anspruch 1, **dadurch gekennzeichnet, dass** sich eine zweite Gruppe mit einer Anzahl M von wenigstens gleich 1 von mobilen Empfängern mit bekannten Positionen in dem gegebenen geografischen Bereich befindet, und dadurch, dass die Leistungen $J_{k,s}$ der von den Störern ausgestrahlten Störsignale so bestimmt werden, dass sie den korrekten Empfang der von den mobilen Empfängern der zweiten Gruppe benutzten GNSS-Dienste nicht beeinflussen, wobei das Verfahren die folgenden zusätzlichen Schritte beinhaltet:

    ◦ Bestimmen der Betriebsschwelle $\Delta N_{i,s}$ für jeden der mobilen Empfänger der zweiten Gruppe;
    ◦ Bestimmen, mit einem Rechenschritt, der optimalen Leistung $J_{k,s}$, die jedem Störsignal s zugeordnet ist, das von jedem der Störer k produziert wird, und die ferner die folgenden Nicht-Störbeschränkungen einhält:

        ■ die folgenden Ungleichungen werden für jeden Empfänger i der zweiten Gruppe und für jeden von dem Empfänger i benutzten GNSS I Dienst erfüllt:

$$\sum_{k=1}^{K}\sum_{s=1}^{S} GE_{k,i}.P_{k,i}.SSC_{I_{k,s},l}.J_{k,s} / A_{k,i} \leq \Delta N_{i,l} \qquad i = N+1,...,N+M$$

3.   Verfahren nach einem der vorherigen Ansprüche, **dadurch gekennzeichnet, dass** der Rechenschritt, der das Bestimmen der optimalen Störleistungen $J_{k,s}$ zulässt, durchgeführt wird, wenn eine Lösung existiert, durch Ausführen des Algorithmus des Simplex, angewandt auf die folgenden Beschränkungen:

$$\text{Max}( C^t.x)$$

$$A.x = b$$

$$x >= 0,$$

wobei $\text{Max}(C^t.x)$ die Beschränkung bedeutet, gemäß der das Skalarprodukt des transponierten Vektors C und x maximal sein muss, wobei $x = \begin{bmatrix} J \\ E \end{bmatrix}$ ein Dimensionsvektor gleich K.S + (N1+M1+K) ist, wobei $J = \begin{bmatrix} \vdots \\ J_l \\ \vdots \end{bmatrix}$ ein

Dimensionsvektor gleich K.S ist, dessen Komponenten die Leistungen $J_l = J_{k,s}$ der Störer sind, wobei $E = \begin{bmatrix} \vdots \\ e_i \\ \vdots \end{bmatrix}$ ein

Dimensionsvektor N1+M1+K ist, dessen Komponenten für den Algorithmus des Simplex spezifische Variablen sind, N1 die Anzahl von einzuhaltenden Störbeschränkungen ist, 0< N1 <= N.S, M1 die Anzahl von einzuhaltenden Nicht-Störbeschränkungen ist, 0<= M1 <= M.S, wobei $C = \begin{bmatrix} [-1] \\ [0] \end{bmatrix}$ ein Dimensionsvektor K.S +N1+M1+K ist, wobei [-1] ein Dimensionsvektor K.S ist, dessen Komponenten alle gleich -1 sind, und [0] ein Dimensionsvektor N1+M1+K ist, dessen Komponenten alle gleich 0 sind, wobei $A = \begin{bmatrix} \begin{bmatrix} -A_a \\ A_b \\ Q \end{bmatrix} & \begin{bmatrix} I_{N1} & 0 & 0 \\ 0 & I_{M1} & 0 \\ 0 & 0 & I_K \end{bmatrix} \end{bmatrix}$ eine Dimensionsmatrix

(N1+M1+K) x (K.S+ N1+M1+K) ist, wobei $A_a = \begin{bmatrix} \vdots \\ \cdots & \alpha_{i,l} & \cdots \\ \vdots \end{bmatrix}$ und $\alpha_{i,l} = GE_{k,i}.P_{k,i}.SSC_{l,i} \,/\, A_{k,i}$, wobei i von 1 bis N.S variiert und I von 1 bis K.S variiert, $A_b = \begin{bmatrix} \vdots \\ \cdots & \beta_{i,l} & \cdots \\ \vdots \end{bmatrix}$ und $\beta_{i,l} = GE_{k,i}.P_{k,i}.SSC_{l,i} \,/\, A_{k,i}$, wobei i von N.S +1 bis (N+M).S variiert und I von 1 bis K.S variiert, wenn wenigstens eine Nicht-Störbedingung vorliegt, ansonsten ist $A_b$ null,

$I_{N1}$ die Dimensionsidentitätsmatrix N1xN1 ist,
$I_{M1}$ die Dimensionsidentitätsmatrix M1xM1 ist,
$I_k$ die Dimensionsidentitätsmatrix KxK ist,

$$Q = \begin{bmatrix} \vdots \\ \cdots & q_{i,j} & \cdots \\ \vdots \end{bmatrix},$$ wobei $q_{i,j}$ = 1 für j ist, das von (i-1).S+1 bis i.S variiert, und $q_{i,j}$ = 0 ist, ansonsten

$$b = \begin{bmatrix} -D_a \\ D_b \\ J\max \end{bmatrix},$$ wobei $D_a = \begin{bmatrix} \vdots \\ \Delta N_i \\ \vdots \end{bmatrix}$ ein Dimensionsvektor N1 ist, dessen Komponenten die Betriebsschwellen

$\Delta N_{i,s}$ für jeden GNSS-Empfänger der ersten Gruppe sind, wobei $D_b = \begin{bmatrix} \vdots \\ \Delta N_i \\ \vdots \end{bmatrix}$ ein Dimensionsvektor M1 ist, dessen Komponenten die Betriebsschwellen $\Delta N_i$ für jeden GNSS-Empfänger der zweiten Gruppe sind, wobei

$$J_{\max} = \begin{bmatrix} \vdots \\ Jk_{\max} \\ \vdots \end{bmatrix}$$ ein Dimensionsvektor K ist, dessen Komponenten die maximalen Leistungen jedes der Störer sind.

**4.** Störsystem (100), das mehrere Störer (109, 110, 111), ausgelegt zum Erzeugen wenigstens eines Störsignals, das eine Störung des von wenigstens einem mobilen Empfänger des GNSS-Typs empfangenen Signals zulässt, und eine Zentraleinheit (113) umfasst, die durch Kommunikationsmittel (112) zu einem Netzwerk angeordnet sind, wobei das System **dadurch gekennzeichnet ist, dass** die Zentraleinheit (113) Mittel zum Ausführen der Schritte des Verfahrens nach einem der Ansprüche 1 bis 3 umfasst.

## Claims

**1.** A method for jamming, using a number K of jammers that is at least equal to one, signals of the GNSS type received by a first group, comprising a number N, which is at least equal to one, of mobile receivers i with known positions within a given geographic area, said mobile receivers being adapted to receive at least one GNSS signal transmitted according to a given waveform in order to support a service I, said jammers k being adapted to generate at least one jamming signal s having a power $J_{k,s}$ that is at most equal to a maximum power $J_{k\max}$, said jamming signal being adapted to jam said GNSS signal supporting said service I, said method being **characterised in that** it comprises at least the following steps:

◦ determining, for each of said mobile receivers i and for each of said GNSS signals received by said receiver i, an operating margin $\Delta N_{i,l} = \dfrac{G_l.C_l}{\eta.L_R} - N_{th}.F_R$ as a function of the gain $G_l$ procured by the antenna of said receiver i on the GNSS signal that it receives, of the power $C_l$ of the received GNSS signal before the antenna of said receiver i, with $L_R$ being a term modelling the power losses inside said receiver i, $F_R$ being the noise factor of said receiver i, $N_{th}$ being the thermal noise power that affects the GNSS signal received by said receiver i and $\eta$ being the minimum value of the signal-to-interference-plus-noise ratio below which said receiver i no longer receives said GNSS signal;

◦ determining, using a computation step, the optimal power $J_{k,s}$ that is assigned to each jamming signal s produced by each of said jammers k and that complies with the following constraints:

▪ the total jamming power $J = \sum\limits_{k=1}^{K}\sum\limits_{s=1}^{S} J_{k,s}$ is as low as possible, with S being the number of different jamming signals generated by said jammer k;

▪ the following jamming constraint is complied with for each receiver i and for each GNSS l service used by said receiver i:

$$\sum_{k=1}^{K}\sum_{s=1}^{S} GE_{k,i}.P_{k,i}.SSC_{l_{k,s},l}.J_{k,s} / A_{k,i} \geq \Delta N_{i,l} \qquad i = 1,...,N$$

with $GE_{k,i}$ being the gain of the antenna of said jammer k towards said receiver i, $P_{k,i}$ being the level of rejection of the jamming signal by the antenna of said jammer k, $A_{k,i}$ being a term modelling the propagation losses between said jammer k and said receiver i, $SSC_{l_{k,s},l}$ being the spectral correlation coefficient between the jamming signal and the signal that supports the service l and is received by said receiver i.

2. The method according to claim 1, **characterised in that** a second group, which comprises a number M that is at least equal to 1, of mobile receivers with known positions is located in said given geographic area and **in that** the powers $J_{k,s}$ of said jamming signals transmitted by said jammers are determined so that they do not affect the correct reception of the GNSS services used by said mobile receivers of said second group, said method comprising the following additional steps:

◦ determining said operating threshold $\Delta N_{i,s}$ for each of the mobile receivers of said second group;

◦ determining, using a computation step, the optimal power $J_{k,s}$ that is assigned to each jamming signal s produced by each of said jammers k and that also complies with the following non-jamming constraints:

▪ the following inequalities are complied with for each receiver i of said second group and for each service GNSS l used by said receiver i:

$$\sum_{k=1}^{K}\sum_{s=1}^{S} GE_{k,i}.P_{k,i}.SSC_{l_{k,s},l}.J_{k,s} / A_{k,i} \leq \Delta N_{i,l} \qquad i = N+1,...,N+M$$

3. The method according to any one of the preceding claims, **characterised in that** said computation step allowing said optimal jamming powers $J_{k,s}$ to be determined is carried out, if a solution exists, by executing the algorithm of the Simplex applied to the following constraints:

$$\text{Max}(\ C^t.x)$$

$$A.x = b$$

$$x >= 0,$$

where Max($C^t.x$) denotes the constraint according to which the scalar product of the transposed vector C and x must be maximum, with $x = \begin{bmatrix} J \\ E \end{bmatrix}$ being a dimension vector equal to K.S + (N I +M I +K), with $J = \begin{bmatrix} \vdots \\ J_l \\ \vdots \end{bmatrix}$ being a

dimension vector equal to K.S, the components of which are the powers $J_l=J_{k,s}$ of said jammers, $E = \begin{bmatrix} \vdots \\ e_i \\ \vdots \end{bmatrix}$ being

a dimension vector N1+M1+K, the components of which are variables specific to the algorithm of the simplex, N1 is the number of jamming constraints to be complied with, 0< N1 <= N.S, M1 is the number of non-jamming constraints to be complied with, 0<= M1 <= M.S, $C = \begin{bmatrix} [-1] \\ [0] \end{bmatrix}$ being a dimension vector K.S +N1+M1+K, with

[-1] being a dimension vector K.S, all of the components of which are equal to -1, and [0] being a dimension vector N1+M1+K, all of the components of which are equal to 0, $A = \begin{bmatrix} \begin{bmatrix} -A_a \\ A_b \\ Q \end{bmatrix} & \begin{bmatrix} I_{N1} & 0 & 0 \\ 0 & I_{M1} & 0 \\ 0 & 0 & I_K \end{bmatrix} \end{bmatrix}$ being a dimension matrix (N1+M1+K) x (K.S+ N1+M1+K), with $A_a = \begin{bmatrix} & \vdots & \\ \cdots & \alpha_{i,l} & \cdots \\ & \vdots & \end{bmatrix}$ and $\alpha_{i,l} = GE_{k,i}.P_{k,i}.SSC_{l,l} / A_{k,i}$, with i varying from 1 to N.S and l varying from 1 to K.S, $A_b = \begin{bmatrix} & \vdots & \\ \cdots & \beta_{i,l} & \cdots \\ & \vdots & \end{bmatrix}$ and $\beta_{i,l} = GE_{k,i}.P_{k,i}.SSC_{l,i} / A_{k,i}$, with i varying from N.S +1 to (N+M).S and l varying from 1 to K.S, if at least one non-jamming condition exists, otherwise $A_b$ is zero,

$I_{N1}$ is the dimension identity matrix N1xN1,
$I_{M1}$ is the dimension identity matrix M1xM1,
$I_k$ is the dimension identity matrix KxK,

$Q = \begin{bmatrix} & \vdots & \\ \cdots & q_{i,j} & \cdots \\ & \vdots & \end{bmatrix}$ with $q_{i,j} = 1$ for j varying from (i-1).S+1 to i.S and $q_{i,j} = 0$ otherwise, $b = \begin{bmatrix} -D_a \\ D_b \\ J\max \end{bmatrix}$ with

$D_a = \begin{bmatrix} \vdots \\ \Delta N_i \\ \vdots \end{bmatrix}$ being a dimension vector N1, the components of which are the operating thresholds $\Delta N_{i,s}$ for each GNSS receiver of said first group, $D_b = \begin{bmatrix} \vdots \\ \Delta N_i \\ \vdots \end{bmatrix}$ being a dimension vector M1, the components of which are

the operating thresholds $\Delta N_i$ for each GNSS receiver of said second group, $J_{max} = \begin{bmatrix} \vdots \\ Jk_{max} \\ \vdots \end{bmatrix}$ being a dimension

vector K, the components of which are the maximum powers of each of the jammers.

4. A jamming system (100) comprising a plurality of jammers (109, 110, 111) adapted to generate at least one jamming signal allowing interference of a signal that is received by at least one mobile receiver of the GNSS type and a centralised unit (113) arranged in a network by communication means (112), said system being **characterised in that** said centralised unit (113) comprises means for executing the steps of the method according to any one of claims 1 to 3.

FIG.1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202006014908